# EUROPEAN PATENT SPECIFICATION

(11) **EP 4 141 682 B1**
(45) Date of publication and mention of the grant of the patent: **20.11.2024**
(21) Application number: 22190479.0
(22) Date of filing: 16.08.2022
(51) Int. Cl.: G06F 12/0813, G06F 12/0862, G06F 12/0868, G06F 13/28, G06F 12/0873, G06F 12/0815

(54) **SYSTEMS, METHODS, AND APPARATUS FOR TRANSFERRING DATA BETWEEN INTERCONNECTED DEVICES**
SYSTEME, VERFAHREN UND GERÄTE ZUM ÜBERTRAGEN VON DATEN ZWISCHEN MITEINANDER VERBUNDENEN VORRICHTUNGEN
SYSTÈMES, PROCÉDÉS ET APPAREIL POUR LE TRANSFERT DE DONNÉES ENTRE DES DISPOSITIFS INTERCONNECTÉS

(30) Priority: 20.08.2021 US 202163235666 P; 07.10.2021 US 202117496759
(43) Date of publication of application: 01.03.2023
(73) Proprietor: Samsung Electronics Co., Ltd., Suwon-si, Gyeonggi-do 16677 (KR)
(72) Inventor: NGUYEN, Marie Mai, San Jose, CA 95134 (US); PITCHUMANI, Rekha, San Jose, CA 95134 (US); PARK, Heekwon, San Jose, CA 95134 (US); KI, Yangseok, San Jose, CA 95134 (US)
(74) Representative: Kuhnen & Wacker Patent- und Rechtsanwaltsbüro PartG mbB

(56) References cited:
- US-A1- 2008 104 325
- US-A1- 2011 078 386
- US-A1- 2018 322 387
- US-A1- 2019 102 303
- US-A1- 2020 081 848
- US-A1- 2020 104 259
- US-A1- 2021 064 529

## Description

### TECHNICAL FIELD

This invention relates generally to data transfer, and more specifically to systems, methods, and apparatus for transferring data between interconnected devices.

### BACKGROUND

In some processing systems, a computing workload may be split among multiple compute devices, each of which may include a processor and memory. Data produced as a result of a first computation by a first one of the compute devices may be stored at a storage device, then transferred to a second one of the compute devices where it may be used as an input to a second computation. A host device may coordinate data movement between the compute devices and the storage device.

The above information disclosed in this Background section is only for enhancement of understanding of the background of the invention and therefore it may contain information that does not constitute prior art.

From US 2019/102303 A1 there is known an apparatus for implementing a software-transparent hardware predictor for core-to-core data communication optimization are described herein. The apparatus includes a plurality of hardware processor cores each including a private cache; a shared cache that is communicatively coupled to and shared by the plurality of hardware processor cores; and a predictor circuit. The predictor circuit is to track activities relating to a plurality of monitored cache lines in the private cache of a producer hardware processor core (producer core) and to enable a cache line push operation upon determining a target hardware processor core (target core) based on the tracked activities.

From US 2020/081848 A1 there is known a storage device that includes a storage region in which first data is stored and that is accessed using a first virtual address, and a memory controller configured to control stored data stored in the storage region. The memory controller predicts second data to be accessed using a second virtual address based on the first virtual address, prefetches the second data into an external device, and modifies a physical address mapped to the second virtual address so that the prefetched second data is accessible by a host in communication with the storage device.

From US 2021/064529 A1 and US 2020/104259 A1 there are known direct cache transfer (DCT) mechanisms that initiate a DCT at the time the updated data is being evicted from the producer cache. Since the direct cache transfer takes place at the time the updated data is being evicted, by the time the consumer begins its task, the updated contents have already been placed in its own cache or another cache within the cache hierarchy.

US 2008/104325 A1 discloses a producer/consumer data processing model for data migration techniques / external cache allocation ("cache push" and prefetch); uses prefetch hints, originating from the consumer.

US 2011/078386 A1 discloses data buffering in media and pipelined processing components, wherein a buffer (i.e. first fill last spills buffer) has a consumer reading information corresponding to a data structure from a memory and processing the data from the producer based on the data structure.

US 2018/322387 A1 discloses a distributed neural network operating on a producer/consumer data processing model.

### SUMMARY

The invention is set out in the appended set of claims.

### BRIEF DESCRIPTION OF THE DRAWINGS

The figures are not necessarily drawn to scale and elements of similar structures or functions may generally be represented by like reference numerals or portions thereof for illustrative purposes throughout the figures. The figures are only intended to facilitate the description of the various embodiments described herein. The figures do not describe every aspect of the teachings disclosed herein and do not limit the scope of the claims. To prevent the drawings from becoming obscured, not all of the components, connections, and the like may be shown, and not all of the components may have reference numbers. However, patterns of component configurations may be readily apparent from the drawings. The accompanying drawings, together with the specification, illustrate example embodiments of the present invention, and, together with the description, serve to explain the principles of the present invention defined by the appended claims.
Fig. 1 illustrates an embodiment of a system for splitting a processing workload among multiple compute devices in accordance with example embodiments of the invention.
Fig. 2 illustrates an embodiment of a system with data prefetching and transfer in accordance with example embodiments of the invention.
Fig. 3 illustrates an example embodiment of a system with data prefetching and transfer in accordance with example embodiments of the invention.
Fig. 4 illustrates an example embodiment of a method for storing data in accordance with example embodiments of the invention.
Fig. 5 illustrates an example embodiment of a method for storing, prefetching, and transferring data in accordance with example embodiments of the invention.
Fig. 6 illustrates an example embodiment of a method for prefetching data in accordance with example embodiments of the invention.
Fig. 7 illustrates an example embodiment of a host-based memory allocation method in accordance with example embodiments of the invention.
Fig. 8 illustrates an example embodiment of a unified memory architecture in accordance with example embodiments of the invention.
Fig. 9 illustrates an example embodiment of a storage device-based memory allocation method in accordance with example embodiments of the invention.
Fig. 10 illustrates an example embodiment of a memory allocation method in accordance with example embodiments of the invention.
Fig. 11 illustrates an example embodiment of a method for storing, prefetching, and transferring data method in accordance with example embodiments of the invention.
Fig. 12 illustrates an example embodiment of a heterogeneous memory control system in accordance with example embodiments of the invention.
Fig. 13 illustrates an example embodiment of a host apparatus that may be used to implement data prefetching and transfer in accordance with example embodiments of the invention.
Fig. 14 illustrates an example embodiment of a device that may be used to implement data prefetching and transfer in accordance with example embodiments of the invention.
Fig. 15 illustrates aspects of a method for transferring data in accordance with example embodiments of the invention.

### DETAILED DESCRIPTION

A storage device in accordance with example embodiments of the invention may prefetch data stored at the storage device and transfer it to a consumer device that may use the data for a computation or other processing. In some embodiments, this may reduce or eliminate the involvement of a host which may be a bottleneck in transferring data between devices. Depending on the implementation details, prefetching data and transferring it to a consumer device may reduce access latency and/or synchronization overhead, and/or may enable data input and/or output (I/O) operations to overlap with data processing operations at the consumer device, thereby improving throughput.

In some embodiments, a producer device and a consumer device may be coupled through an interconnect in a pipeline configuration to perform distributed computations such as machine learning (ML) training and/or inference. For example, a producer device (e.g., a compute device such as an accelerator, graphics processing unit (GPU), and/or the like) may write the results of a first stage of computation to a storage device through the interconnect. A consumer device (e.g., another compute device such as an accelerator, GPU, and/or the like) may read the results from the storage device and use the results for a next stage of computation. In some embodiments, a prefetcher in the storage device may prefetch the results stored by the producer device and transfer the results to the consumer device in anticipation of the consumer device using the results for the next stage of computation. Depending on the implementation details, this may enable data to be transferred to the consumer device in parallel with other processing being performed by the consumer device, thereby reducing or hiding memory and/or storage device access latency.

A storage device may determine which consumer device to transfer prefetched data to based on various techniques in accordance with example embodiments of the invention. In an embodiment, a prefetcher for a storage device receives information from an application (e.g., running on a host coupled to the interconnect) indicating producer-consumer relationships between one or more producer devices and one or more consumer devices. Thus, when a specific producer device writes data to the storage device (e.g., a specific amount of data written to a specific location), the prefetcher may prefetch the data and transfer it to a specific consumer device. As another example, in some embodiments, a prefetcher may monitor read and/or write operations for a storage device to detect one or more access patterns that may predict which consumer device is likely to use data stored by a specific producer device.

To provide a target location for writing prefetched data at a consumer device, a storage device may allocate memory at a consumer device based on various techniques in accordance with example embodiments of the invention. For example, in some embodiments, a storage device may send a memory allocation request to a host which may allocate target memory at the consumer device (e.g., through a virtual memory manager (VMM) at the host). As another example, the storage device may allocate the target memory itself (e.g., using a VMM at the prefetcher). In some embodiments in which the storage device allocates the target memory, the storage device may copy the prefetched data to a reserved area of memory at the consumer device.

In some embodiments, an interconnect between a producer device, a consumer device, a storage device, and/or a host may be implemented at least partially with a memory coherent interface and/or using one or more memory coherent protocols. In such embodiments, one or more aspects of the memory coherent interface and/or protocol may be used to implement one or more features in accordance with example embodiments of the invention. For example, in some embodiments, a coherency engine may send information about one or more producer-consumer relationships to a prefetcher using one or more protocol fields such as a tag field.

In some embodiments, a storage device may store data from one or more producer devices in one or more streams at the storage device. For example, data having similar lifetimes and/or similar producer-consumer relationships may be placed in the same streams. Thus, in some embodiments, data destined for the same consumer device may be placed in the same stream. Depending on the implementation details, this may improve garbage collection and/or block erase operations at the storage device, because, for example, some or all of the data transferred to a specific consumer device may become invalid at the same time.

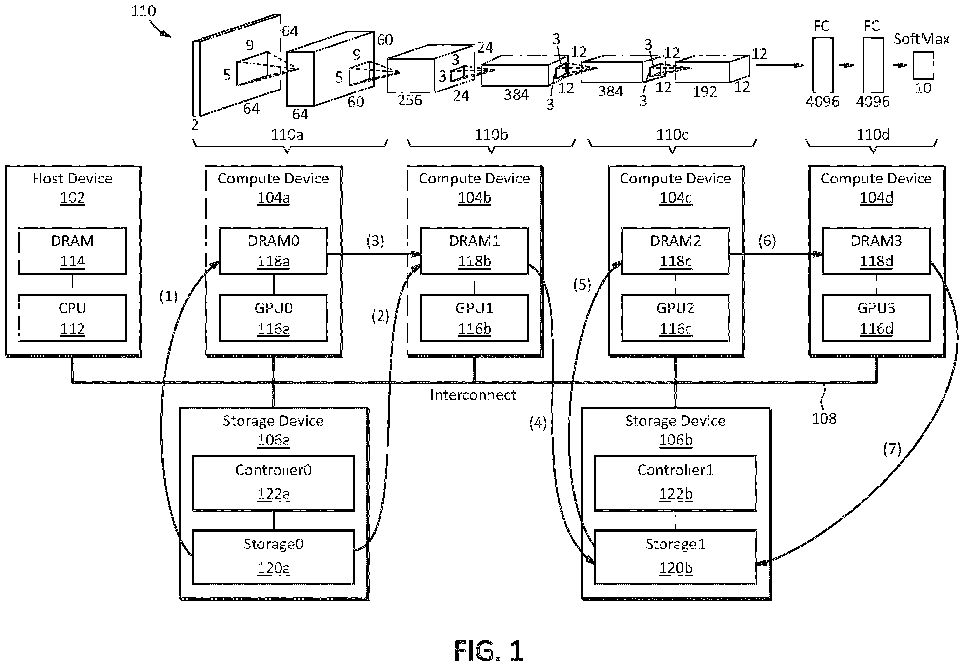

Fig. 1 illustrates an embodiment of a system for splitting a processing workload among multiple compute devices in accordance with example embodiments of the invention. The system illustrated in Fig. 1 may include a host device 102, four compute devices 104a, 104b, 104c, and 104d (which may be referred to collectively as 104), and two storage devices 106a and 106b (which may be referred to collectively as 106). The host device 102, compute devices 104, and storage devices 106 may communicate through an interconnect 108. Each of the compute devices 104 may process a corresponding stage of an ML workload 110, which in this embodiment, may be implemented as a neural network. Thus, compute devices 104a, 104b, 104c, and 104d may process corresponding stages 110a, 110b, 110c, and 110d, respectively, of the neural network workload 110. The final stage 110d may include, for example, one or more fully connected (FC) layers and a SoftMax function.

The host device 102 may include a central processing unit (CPU) 112 and a memory 114 which, in this embodiment, may be implemented with dynamic random access memory (DRAM). Each of the compute devices 104a, 104b, 104c, and 104d may include a corresponding GPU 116a, 116b, 116c, and 116d, respectively (indicated as GPU0, GPU1, GPU2, and GPU3, respectively). The GPUs 116a, 116b, 116c, and 116d may be referred to collectively as 116. Each of the compute devices 104a, 104b, 104c, and 104d may further include a corresponding local device memory 118a, 118b, 118c, and 118d, respectively (indicated as DRAM0, DRAM1, DRAM2, and DRAM3, respectively). The local device memories 118a, 118b, 118c, and 118d may be d to collectively as 118. Each of the storage devices 106a and 106b may include a corresponding local storage medium 120a and 120b, respectively (indicated as Storage0 and Storage1, respectively). The local storage medium 120a and 120b may be referred to collectively as 120. Each of the storage devices 106a and 106b may further include a corresponding controller 122a and 122b, respectively, (indicated as Controller0 and Controller1, respectively). The controllers 122a and 122b may be referred to collectively as 122.

In some embodiments, an application running on the host device 102 may coordinate data movement between the individual device local memories. For example, the host device 102 may send one or more commands to one of the storage devices 106 to transfer data from the local memory 118 of one of the compute devices 104a-d to the storage medium 120 of the storage device 106. This may be referred to as pulling data from the local memory 118. The host device 102 may also send one or more commands to one of the storage devices 106 to transfer data from the storage medium 120 of the storage device 106 to the local memory 118 of one of the compute devices 104a-d. This may be referred to as pushing data to the local memory 118.

In the embodiment illustrated in Fig. 1, an example data flow coordinated by the CPU 112 of host device 102 is shown by data transfers (1), (2), (3), (4), (5), (6), and (7). Thus, at operation (1), first data may first be pushed from Storage0 to DRAM0 where it may be read and used as an input to a computation performed by GPUO. At operation (2), second data may be pushed from Storage0 to DRAM1. However, a computation using the second data at GPU1 may wait until a result of the computation performed by GPUO is stored as third data in DRAM0 then transferred at operation (3) to DRAM1. The second and third data may be used as inputs to a computation performed by GPU1, the result of which may be written as fourth data to DRAM1. The fourth data may then be pulled to Storage1 at operation (4). Fifth data may be pushed from Storage1 to DRAM2 at operation (5). The fifth data may be used as an input to a computation by GPU2, the output of which may be written as sixth data to DRAM2. The sixth data may be transferred to DRAM3 at operation (6) then used as an input to a computation performed by GPU3, the output of which may be written as seventh data to DRAM3. The seventh data may then be pulled to Storage1 at operation (7).

Depending on the implementation details, the host device 102 may be a bottleneck for data movement between devices because it may be involved in coordinating some or all of the data transfers. Thus, the storage devices 106 may be passive participants in the data movement. Moreover, in some embodiments, data transfers between the local memories 118 and the storage media 120 may only occur while a processing kernel is not executing on the corresponding GPU 116.

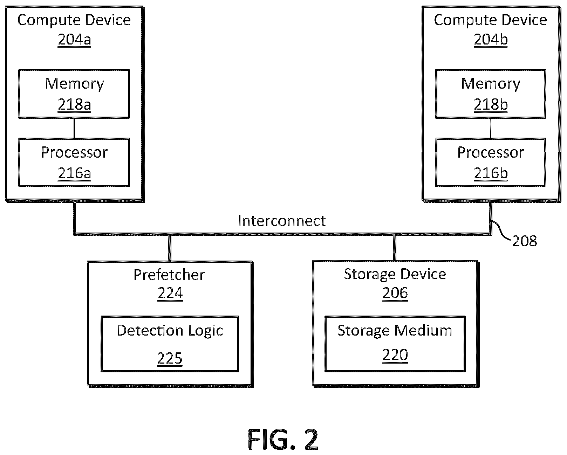

Fig. 2 illustrates an embodiment of a system with data prefetching and transfer in accordance with example embodiments of the invention. The system illustrated in Fig. 2 may include a first compute device 204a, a second compute device 204b, a storage device 206, and a prefetcher 224, all of which may communicate through an interconnect 208. The first and second compute devices 204a and 204b may each include a corresponding processor or other general initiator (GI) 216a and 216b, respectively, and a corresponding memory 218a and 218b, respectively. The storage device 206 may include a storage medium 220.

In some embodiments, one or more of the compute devices 204 may operate as a producer device that may produce (e.g., as a result of a computation or other processing) data that may be consumed by one or more of the compute devices 204 that may operate as a consumer device. In some situations, a compute device 204 may operate as both a producer device and a consumer device.

The prefetcher 224 may implement one or more techniques for storing and/or transferring data to and/or from one or more of the compute devices 204 and/or other devices accessible through the interconnect 208 in accordance with example embodiments of the invention. For example, the prefetcher 224 may be implemented as a programmable prefetcher that may prefetch data from local memory at the storage device 206 (e.g., storage medium 220) and push it to the local memory 218 of one or more of the compute devices 204 (e.g., a memory at the device having a processor or other GI 216 that may use the data, or a memory at a device that may be relatively close, or closest, to a processor or other GI that may use the data. Thus, in some embodiments, a consumer device may be a compute device 204 that may include a processor or other GI that may use the transferred data, or a consumer device may be a compute device 204 or other device having a memory that may store the transferred data for a processor or other Gl (e.g., at another device connected to the interconnect 208) that may use the transferred data.

In some embodiments, the prefetcher 224 may determine a consumer device to prefetch data for, and/or push data to, based on information the prefetcher may receive from an application (e.g., running on a host coupled to the interconnect) indicating one or more producer-consumer relationships between one or more producer devices and one or more consumer devices. In some embodiments, the prefetcher 224 may determine a consumer device by monitoring one or more read and/or write operations for one or more storage devices to detect one or more access patterns that may predict which consumer device is likely to use data stored by a specific producer device. In some embodiments, the prefetcher 224 may include detection logic 225 configured to monitor read and/or write operations and/or detect one or more access patterns.

In some embodiments, the prefetcher 224 may allocate memory at a consumer device by requesting a memory allocation by a host device, by allocating the memory itself, or in any other manner.

Depending on the implementation details, the embodiment illustrated in Fig. 2 may reduce, eliminate, and/or hide memory and/or storage access latency for one or more compute devices, storage devices and/or other devices accessible through the interconnect 208. This may reduce or eliminate reliance on a host and/or CPU to coordinate data movement, which in turn, may result in lower CPU utilization. Moreover, depending on the implementation details, data transfers to and/or from consumer and/or producer devices may overlap with other processing (e.g., kernel execution) at the consumer and/or producer devices, thereby improving throughput.

In some embodiments, the prefetcher 224 may be integral with the storage device 206. For example, in some embodiments the prefetcher may be implemented partially or entirely as part of a storage device controller for the storage device 206. As another example, in some embodiments, the prefetcher 224 may be implemented partially or entirely as part of a host device and/or one or more of the compute devices 204.

The compute devices 204 may be implemented with any type of device that may include memory 218 and/or processor or other Gl 216 that may produce and/or use data that may be stored in the storage device 206. Examples may include GPUs, accelerators, neural processing units (NPUs), tensor processing units (TPUs), network interface cards (NICs), and/or the like.

Any of the memories 218a and 218b and/or storage medium 220 may be implemented with any type of memory and/or storage media including any type of solid state media, magnetic media, optical media, and/or the like, any type of volatile memory such DRAM, static random access memory (SRAM), and/or the like, any type of nonvolatile memory including flash memory such as not-AND (NAND) flash memory, persistent memory (PMEM) such as cross-gridded nonvolatile memory, memory with bulk resistance change, phase change memory (PCM), and/or the like, or any combination thereof.

The interconnect 208 may be implemented one or more of any type of interface and/or protocol including Peripheral Component Interconnect Express (PCIe), Nonvolatile Memory Express (NVMe), NVMe-over-fabric (NVMe-oF), Ethernet, Transmission Control Protocol/Internet Protocol (TCP/IP), remote direct memory access (RDMA), RDMA over Converged Ethernet (ROCE), FibreChannel, InfiniBand, Serial ATA (SATA), Small Computer Systems Interface (SCSI), Serial Attached SCSI (SAS), iWARP, and/or the like, or any combination thereof. In some embodiments, the interconnect 208 may be implemented with one or more memory semantic and/or memory coherent interfaces and/or protocols such as Compute Express Link (CXL), and/or CXL.mem, CXL.io, and/or CXL.cache, Gen-Z, Coherent Accelerator Processor Interface (CAPI), Cache Coherent Interconnect for Accelerators (CCIX), and/or the like, or any combination thereof.

For purposes of illustration, the embodiment illustrated in Fig. 2 may include a device 206 that is implemented as a storage device. However, the principles of this invention may be implemented with any type of device that may be used to store, prefetch, and/or transfer data in accordance with example embodiments of the invention. Examples of devices that may prefetch and transfer data may include caching devices (e.g., CXL Type-1 devices), accelerators with memory (e.g., CXL Type-2 Devices), memory buffer devices (e.g., CXL Type-3 devices), NICs, with memory, and/or the like.

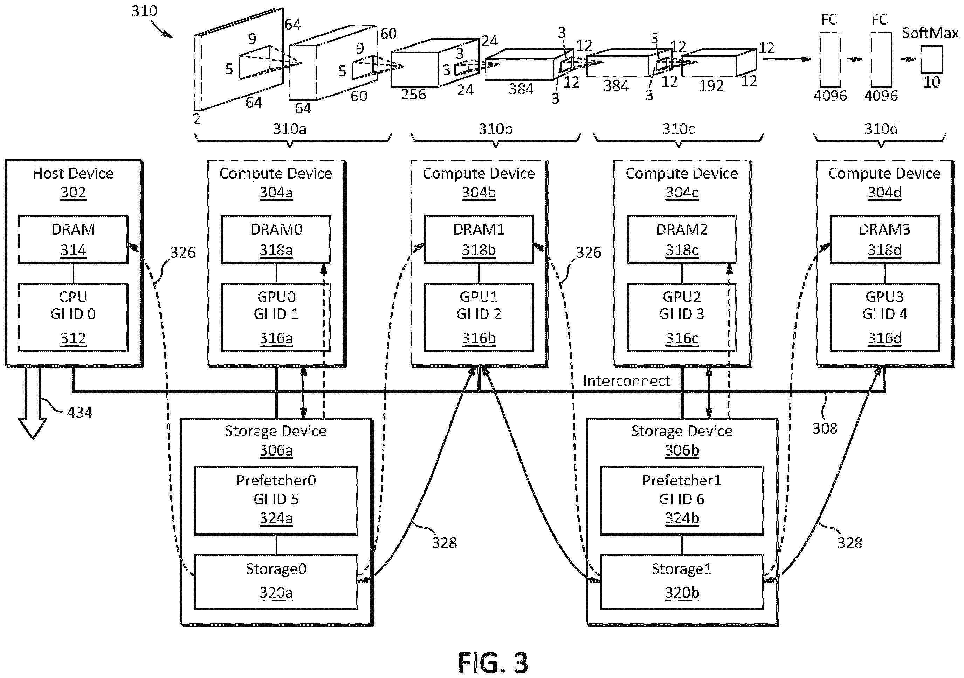

Fig. 3 illustrates an example embodiment of a system with data prefetching and transfer in accordance with example embodiments of the invention. The embodiment illustrated in Fig. 3 may be used, for example, to implement the system illustrated in Fig. 2 and/or any prefetching and/or data transfer features described herein.

Referring to Fig. 3, the system may include a host device 302, any number of (in this example, four) compute devices 304a, 304b, 304c, and 304d (which may be referred to collectively as 304), and any number of (in this example, two) storage devices 306a and 306b (which may be referred to collectively as 306). The host device 302, compute devices 304, and/or storage devices 306 may communicate through an interconnect 308.

For purposes of illustration, each of the compute devices 304 may process a corresponding stage of an ML workload 310, which in this embodiment, may be implemented as a neural network. Thus, compute devices 304a, 304b, 304c, and 304d may process corresponding stages 31 0a, 31 0b, 310c, and 310d, respectively, of the neural network workload 310. The final stage 310d may include, for example, one or more fully connected (FC) layers and a SoftMax function. However, the system illustrated in Fig. 3 may be used for any other type of computations and/or processing.

The host device 302 may include a central processing unit (CPU) 312 and a memory 314 which, in this embodiment, may be implemented with dynamic random access memory (DRAM), but may also be implemented with any other type of memory.

For purposes of illustration, each of the compute devices 304a, 304b, 304c, and 304d may include a corresponding GPU 316a, 316b, 316c, and 316d, respectively (indicated as GPU0, GPU1, GPU2, and GPU3, respectively). The GPUs 316a, 316b, 316c, and 316d may be referred to collectively as 316. However, any other type of compute and/or processing apparatus may be used.

Each of the compute devices 304a, 304b, 304c, and 304d may further include a corresponding local device memory 318a, 318b, 318c, and 318d, respectively (indicated as DRAM0, DRAM1, DRAM2, and DRAM3, respectively). The local device memories 318a, 318b, 318c, and 318d may be referred to collectively as 318. For purposes of illustration, the memories 318 may be implemented with DRAM as shown in Fig. 3, but any other type of memory may be used.

Each of the storage devices 306a and 306b may include a corresponding local storage medium 320a and 320b, respectively (indicated as Storage0 and Storage1, respectively). The local storage medium 320a and 320b may be referred to collectively as 320. For purposes of illustration, the storage media 320 may be assumed to be NAND flash memory, but any type of memory and/or storage media may be used.

Each of the storage devices 306a and 306b may further include a corresponding prefetcher 324a and 324b, respectively, (indicated as Prefetcher0 and Prefetcher1, respectively). The prefetchers 324a and 324b may be referred to collectively as 324.

For purposes of illustration, the interconnect 308 may be implemented with CXL, but any other type of interconnect(s) and/or protocol(s) may be used.

One or more of the CPU 312, the GPUs 316, and/or prefetchers 324 may be assigned a general initiator identifier (GI ID), for example, by the host device 302. In the embodiment illustrated in Fig. 3, the CPU 312, GPUs 316a, 316b, 316c, and 316d and prefetchers 324a and 324b may be assigned GI ID 0, GI ID 1, GI ID 2, GI ID 3, GI ID 4, GI ID 5, GI ID 6, respectively. The GI IDs may be used, for example, to keep track of producer-consumer relationships and/or to facilitate the transfer of data, command, and/or the like throughout the system.

Any of the prefetchers 324 may push data to any of the memories 314 and/or 318 using connections through the interconnect 308, some examples of which are shown by dashed arrows 326. Any of the prefetchers 324 may communicate with any of the GPUs 316 and or CPU 312 using connections through the interconnect 308, some examples of which are shown by solid arrows 328.

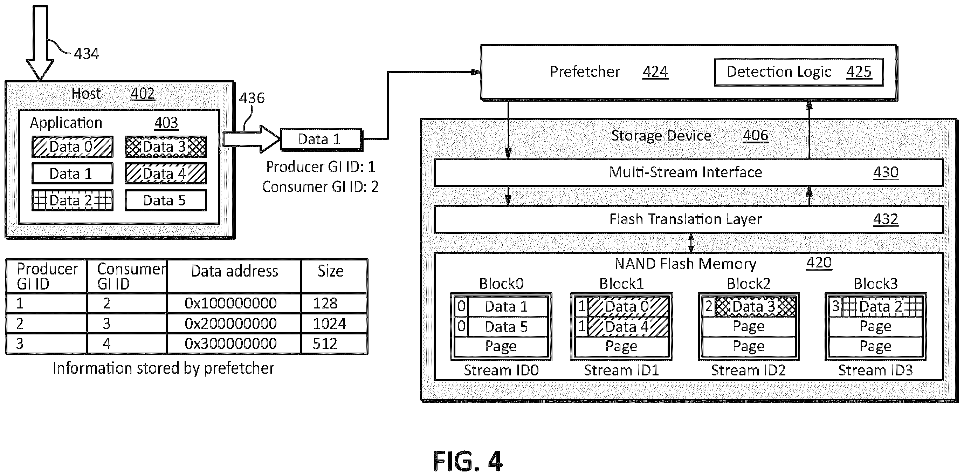

Fig. 4 illustrates an example embodiment of a method for storing data in accordance with example embodiments of the invention. The embodiment illustrated in Fig. 4 may be used, for example, with any of the systems disclosed herein, including those illustrated in Fig. 2 and/or Fig. 3.

Referring to Fig. 4, a storage device 406 may include a multi-stream interface 430, a flash translation layer (FTL) 432 and a storage medium (in this example, NAND flash memory) 420.

An application 403 running on a host device 402 provides one or more indications of producer-consumer relationships to a prefetcher 424. The one or more indications (which may also be referred to as hints) may include information such as a producer GI ID, a consumer Gl ID, a data address, and/or a data size (in bytes, pages, blocks, and/or the like) as illustrated in Table 1 which may be stored by the prefetcher 424.

**Table 1**

| Producer GI ID | Consumer GI ID | Data Address | Data Size |
|---|---|---|---|
| 1 | 2 | 0x10000000 | 128 |
| 2 | 3 | 0x20000000 | 1024 |
| 3 | 4 | 0x30000000 | 512 |

In some embodiments, the application 403 may pass the producer and/or consumer GI IDs to the prefetcher, for example, during data reads and/or writes using one or more CXL fields such as a tag field and/or a metavalue field and metafield field. The host device 402 and/or application 403 may be implemented, for example, with the corresponding host device 302 illustrated in Fig. 3 as shown by arrow 434. In some embodiments, the application 403 may provide the one or more indications of producer-consumer relationships to a prefetcher 424 programmatically, for example, by programming the prefetcher through an application programming interface (API). In some embodiments, the prefetcher 424 may further include detection logic 425 to monitor data reads and/or writes to detect one or more producer-consumer relationships.

Referring to Fig. 4, in some embodiments, data provided by the application 403 and/or a producer device may be stored in one or more streams and/or blocks associate with streams in the storage medium 420 of a storage device based, for example, on one or more producer-consumer relationships and/or one or more data lifetimes. For example, as shown in Fig. 4, data pages Data0, Data1, Data2, Data3, Data4, and/or Data5 in application 403 may have producer-consumer relationships and/or data lifetimes indicated by the various shading shown in Fig. 4. The application 403 is shown providing Producer Gl ID 1 and Consumer GI ID 2 for data page Data1 to the prefetcher 424 as shown by arrow 436. Based on producer producer-consumer relationships such as those shown in Table 1, and/or data lifetimes, the prefetcher may store, through the multi-stream interface 430 and FTL 432, data in Block0, Block1, Block2, and/or Block3 of the storage medium 420 associated with one or more streams identified by stream identifiers Stream ID 0, Stream ID 1, Stream ID 2, and Stream ID 3, respectively.

In the example illustrated in Fig. 4, Data1 and Data5 may be placed in Block0, Data0 and Data4 may be stored in Block1, Data3 may be stored in Block 2, and Data2 may be stored in Block3.

Thus, in some embodiments, a prefetcher may exploit existing apparatus for stream-based placement to place related data in the same stream, which, depending on the implementation details, may provide an efficient storage technique for data to be prefetched and/or pushed to a compute device.

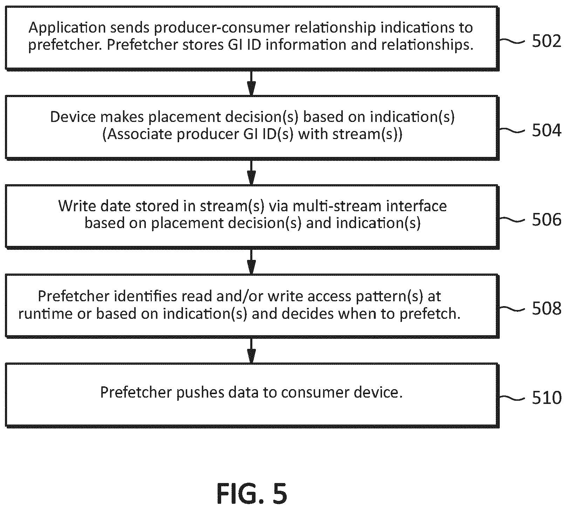

Fig. 5 illustrates an example embodiment of a method for storing, prefetching, and transferring data in accordance with example embodiments of the invention. The embodiment illustrated in Fig. 5 may be used, for example, with any of the systems and/or methods disclosed herein.

Referring to Fig. 5, at operation 502, an application may send information including one or more indications of one or more producer-consumer relationships to a prefetcher of a storage device. The prefetcher may store the information which may include GI IDs and/or relationships, for example, in a data structure such as Table 1.

At operation 504, the storage device may make one or more data placement decisions (e.g., using the prefetcher) based, for example, on one or more indications from the application, for storing data at the device. For example, the prefetcher may select one or more streams for storing data received from a host and/or one or more producer devices based on one or more indications of producer-consumer relationships. At operation 506, the prefetcher may then store the data in the selected streams through a multi-stream interface in the storage device.

At operation 508, the storage device may detect, e.g., using detection logic in the prefetcher, one or more access patterns that may indicate a producer-consumer relationship between one or more producer devices and one or more consumer devices. The detection of access patterns may be in addition to, or an alternative to, the indications of producer-consumer relationship provided by an application and/or host. Based on one or more indicated producer-consumer relationship and/or one or more detected access patterns, the prefetcher may select one or more consumer devices to prefetch data for, and one or more times to prefetch the data. For example, the prefetcher may prefetch data for a specific consumer device when there is free space for the data in the memory of the consumer device.

At operation 510, the prefetcher may push the prefetched data to the consumer device through an interconnect such as CXL. In some embodiments, the prefetcher may perform one or more operations to allocate target space for the data at the consumer device prior to pushing the data as described in more detail below.

In some embodiments, an application may provide the one or more indications of producer-consumer relationships to a prefetcher programmatically, for example, by programming the prefetcher through an application programming interface (API). Such an arrangement may be used, for example, when a user or programmer may have insights into the data access patterns of a workload. An example of a pseudocode definition for a procedure for sending one or more indications (e.g., hints) to a prefetcher may be as follows:
**send_prefetch_hint** (const void * prefetcher, size_t producer_id, size_t consumer_id, const void * buffer_ptr, size_t size, string access_pattern);

### <one or more compute operations>

Examples of parameters that may be provided with an indication of a producer-consumer relationship may be as follows:
Prefetcher: prefetcher device
Producer_id: ID of producer device
Consumer id: ID of consumer device
Buffer_ptr: pointer to memory written by producer and read by consumer
Size: size of memory written by producer
Access_pattern: can be sequential, random, or determined at runtime

An example invocation of the procedure for sending one or more indications to a prefetcher is the a case in which the application provides an access pattern for the prefetcher to identify (e.g., the prefetcher may push data to GPU1 before the end of GPUO kernel execution):
**send_prefetch_hint** (,,,,,"sequential"), **1->4**

An example invocation of the procedure for a case in which an access pattern may be determined by the prefetcher at runtime may be as follows:
**send_prefetch_hint** (,,,,,"runtime"), **1->2->3->4**

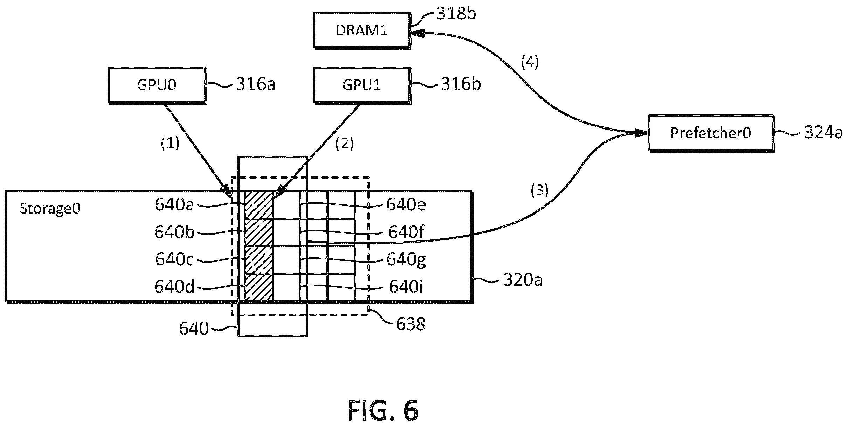

Fig. 6 illustrates an example embodiment of a method for prefetching data in accordance with example embodiments of the invention. The embodiment illustrated in Fig. 6 may be used, for example, with any of the systems and/or methods disclosed herein, but for purposes of illustration, the embodiment illustrated in Fig. 6 may be described in the context of the system illustrated in Fig. 3.

Referring to Fig. 6, at operation (1), the GPU 316a (GPUO) writes 16 data elements to storage medium 320a (Storage0) as indicated by the dashed line 638. To notify the prefetcher 324a (Prefetcher0) that the write is complete, GPUO may write any data to a predetermined memory location using, for example, the CXL interconnect.

In an implementation in which the prefetcher determines an access pattern at runtime, the Prefetcher0 may observe, at operation (2), that GPU1 may read data elements 640a, 640b, 640c, and 640d in sequence after GPUO writes the data 638. At operation (3), based on the observed access pattern, Prefetcher0 prefetches the data 640 when it observes GPUO writing the data 638. Alternatively, or additionally, Prefetcher0 may observe GPU1 sequentially reading data elements 640a, 640b, 640c, and 640d and therefore prefetch data elements 640e, 640f, 640g, and 640i on the assumption that GPU1 will read those data elements next.

In an implementation in which the prefetcher is provided a producer-consumer relationship between GPUO and GPU1, Prefetcher0 does not need to observe the operation (2) and instead, at operation (3), Prefetcher0 prefetches the data 640 based on the producer-consumer relationship when GPUO writes the data 638.

In some embodiments, Prefetcher0 may not perform a prefetch operation unless it first verifies that there is free memory available in memory 318b (DRAM1) at the consumer device. In some embodiments, the prefetcher 324a may be implemented, for example, using combinational and/or sequential logic, one or more neural networks, and/or the like.

At operation (4), Prefetcher0 may push the prefetched data 640 to DRAM1 at the consumer device.

In some embodiments, GPU1 may become aware of the presence of the pushed data using various techniques in accordance with example embodiments of the invention. For example, in embodiments in which the Prefetcher may allocate the memory for the pushed data, GPU1 may check a reserved memory area that may be allocated for the pushed data. As another example, GPU1 may be aware of the presence of the pushed data by checking page table data.

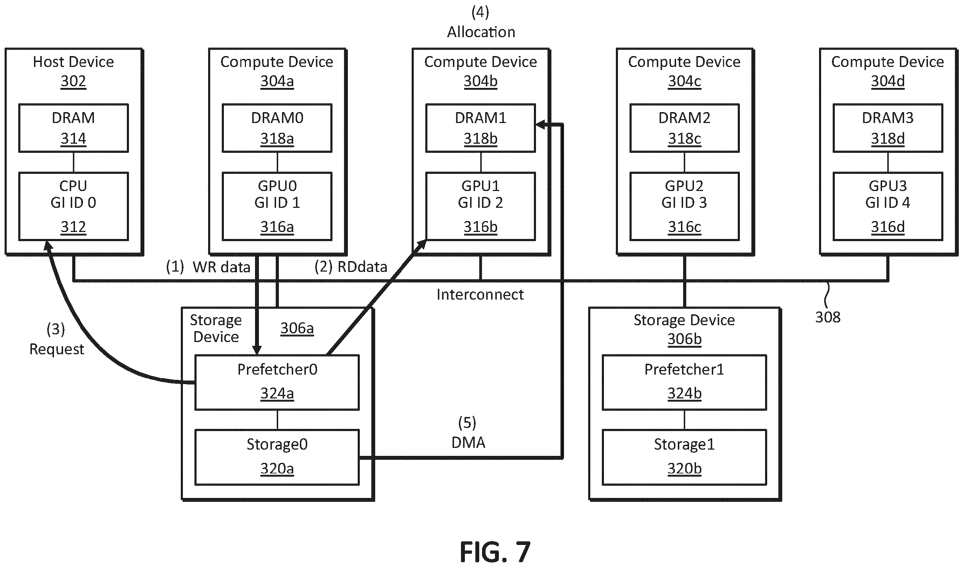

Fig. 7 illustrates an example embodiment of a host-based memory allocation method in accordance with example embodiments of the invention. The embodiment illustrated in Fig. 7 may be used, for example, with any of the systems and/or methods disclosed herein, but for purposes of illustration, the embodiment illustrated in Fig. 7 may be described in the context of the system illustrated in Fig. 3 which is shown in simplified form in Fig. 7.

Referring to Fig. 7, at operation (1) GPUO may write first data to Storage0, which may be observed by Prefetcher0. At operation (2), GPU1 may read the first data from Storage0, which may also be observed by Prefetcher0. Based on operations (1) and (2), Prefetcher0 may detect an access pattern between GPUO and GPU1. Thus, at operation (3) Prefetcher0 may send a request to host device 302 to allocate target memory in DRAM1 for additional data transfers to DRAM1. The request may include, for example, the consumer GI ID for GPU1, the size (amount) of data to transfer, and a logical block address (LBA) indicating the location of the data to transfer.

At operation (4), the host device 302 may allocate the requested memory space in DRAM1. In some embodiments, the CPU 312 of host device 302 may initiate a direct memory access (DMA) transfer of second data from Storage0 to DRAM1 which may be performed at operation (5). In other embodiments, Prefetcher0 may initiate and/or perform the data transfer (e.g., by prefetching the data and pushing it to DRAM1) after the host device 302 completes the memory allocation.

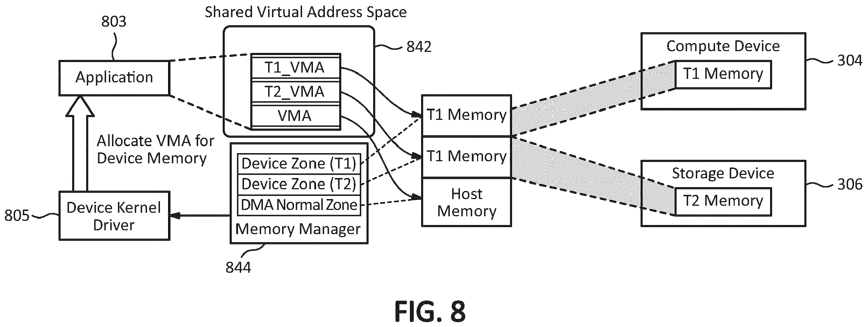

Fig. 8 illustrates an example embodiment of a unified memory architecture in accordance with example embodiments of the invention. The embodiment illustrated in Fig. 8 may be used, for example, to implement the host-based memory allocation method illustrated in Fig. 7. For purposes of illustration, the embodiment illustrated in Fig. 8 may be described in the context of the system illustrated in Fig. 3.

Referring to Fig. 8, the architecture may implement a shared virtual address space 842 having virtual memory addresses (VMAs) such that the CPU 312 may be aware of the memory usage in DRAM0, DRAM1, DRAM2, and DRAM3. The memory manager 844 (e.g., a VMM) may be located at the host device 302 to enable the host device 302 to perform the memory allocation. The host device 302 may also run an application 803 and execute a device kernel driver 805. In some embodiments, the shared virtual address space 842 may be used to map, for example, Tier 1 (T1) memory, Tier 2 (T2) memory, and/or host memory to one or more compute devices 306 and/or storage devices 306. In some embodiments, a coherency engine (e.g., a CXL coherency engine at the host device 302) may maintain coherency between the memories illustrated in Fig. 8.

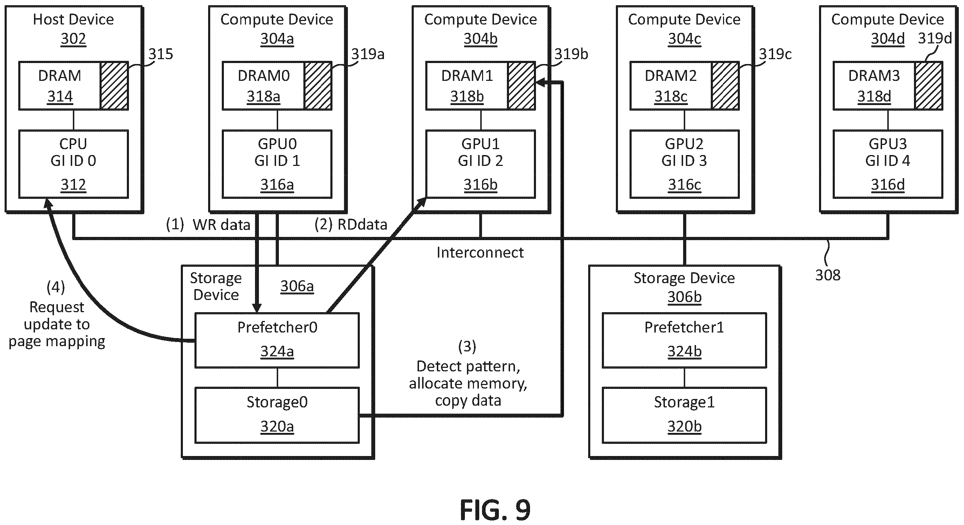

Fig. 9 illustrates an example embodiment of a storage device-based memory allocation method in accordance with example embodiments of the invention. The embodiment illustrated in Fig. 9 may be used, for example, with any of the systems and/or methods disclosed herein, but for purposes of illustration, the embodiment illustrated in Fig. 9 may be described in the context of the system illustrated in Fig. 3 which is shown in simplified form in Fig. 9.

Referring to Fig. 9, the memories 314, 318a, 318b, 318c, and 318d may include reserved areas 315, 319a, 319b, 319c, and 319d, respectively. At operation (1) GPUO may write first data to Storage0, which may be observed by Prefetcher0. At operation (2), GPU1 may read the first data from Storage0, which may also be observed by Prefetcher0. Based on operations (1) and (2), Prefetcher0 may detect an access pattern between GPUO and GPU1. Thus, at operation (3) Prefetcher0 may allocate target memory space in a reserved space 319b of DRAM1 for additional data transfers to DRAM1. Prefetcher0 may allocate the target memory space, for example, using a VMM at the storage device 306a.

Prefetcher0 may then prefetch and copy additional data to the allocated target space in the reserved space 319b of DRAM1. At operation (4), Prefetcher0 may send a request to the host device 302 to update one or more page table mappings of the newly allocated space.

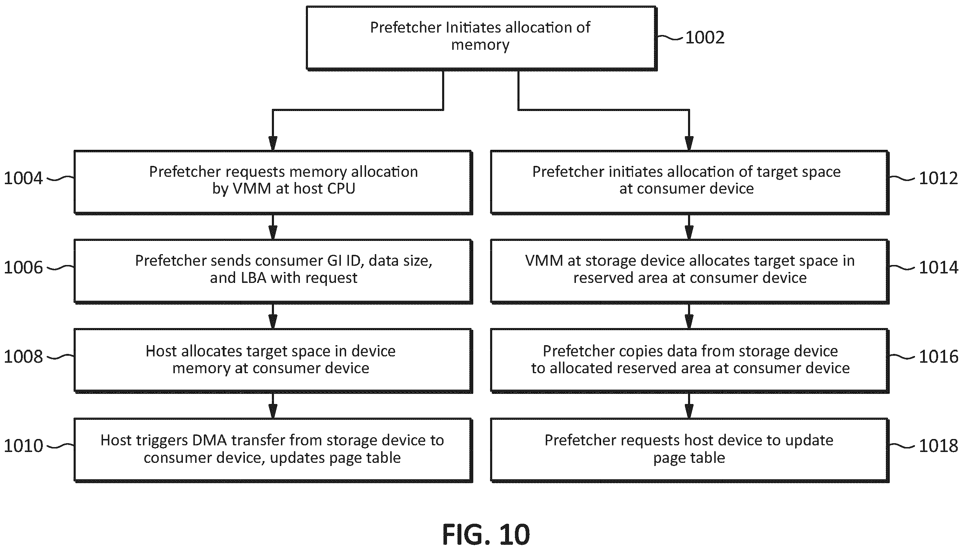

Fig. 10 illustrates an example embodiment of a memory allocation method in accordance with example embodiments of the invention. The embodiment illustrated in Fig. 10 may be used, for example with any of the systems and/or methods disclosed herein.

Referring to Fig 10, at operation 1002, a prefetcher may initiate a memory allocation operation that may be performed, for example, by a request through a host, or by the prefetcher itself. If the prefetcher decides to have the memory allocation performed by the host, it may proceed to operation 1004 where the prefetcher may send a memory allocation request to a CPU of a host device. The prefetcher may send the request, for example, to a VMM on a host CPU side of the system. At operation 1006, as part of the request, the prefetcher may include information such as the consumer GI ID for the GPU at the consumer device for which the memory is to be allocated, the size (amount) of data to transfer, and an LBA indicating the location of the data to transfer. At operation 1008, the VMM at the host device may allocate the requested memory in the device memory at the consumer device corresponding to the GI ID of the GPU. At operation 1010, after allocating the target memory space for the consumer device, the host may trigger a DMA transfer of data from the storage device at which the requesting prefetcher is located, and the target memory at the consumer device. The host may also update a page table to reflect the newly allocated target memory at the consumer device.

If, however, the prefetcher decides to allocate the target memory itself, then at operation 1012, the prefetcher may initiate the allocation with a VMM at the prefetcher. At operation 1014, the VMM may allocate the target memory at the consumer device, for example, from a reserved memory area. At operation 1016, the prefetcher may prefetch the data and copy it to the target memory at the consumer device. At operation 1018, the prefetcher may request the host device to update a page table to reflect the newly allocated target memory at the consumer device.

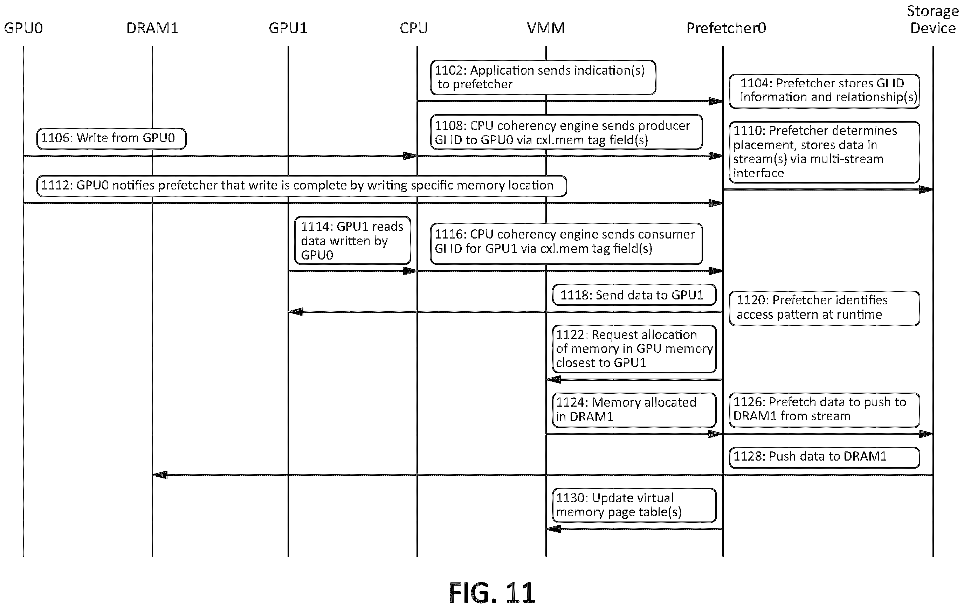

Fig. 11 illustrates an example embodiment of a method for storing, prefetching, and transferring data method in accordance with example embodiments of the invention. The embodiment illustrated in Fig. 11 may be used, for example, with any of the systems and/or methods disclosed herein, but for purposes of illustration, the embodiment illustrated in Fig. 11 may be described in the context of the system illustrated in Fig. 3. Thus, GPU0, DRAM1, GPU1, CPU, Prefetcher0, and Storage Device may refer to elements 316a, 318b, 316b, 312, 324a, and 306a, respectively, in Fig. 3.

Referring to Fig. 11, the method may begin at operation 1102 when the CPU may send one or more indications of producer-consumer relationships to Prefetcher0. At operation 1104, Prefetcher0 may store one or more Gl ID and/or information about producer-consumer relationships.

At operation 1106, GPU0, at the producer device, may begin writing first data to the Storage Device. At operation 1108, a CPU coherency engine may send a producer (e.g., initiator) GI ID for GPUO to Prefetcher0, for example, using one or more cxl.mem fields such as the tag field. At operation 1110, Prefetcher0 may determine a stream in which to place the first data from GPUO and store the first data via a multi-stream interface based, for example, on one or more of the stored indications and/or the determined placement. At operation 1112, GPUO may notify Prefetcher0 that the write operation of the first data is complete, for example, by writing any data to a predetermined memory location.

At operation 1114, GPU1 may begin a read operation of the first data from the Storage Device (which was written by GPUO). At operation 1116, the CPU coherency engine may send a consumer GI ID for GPU1 to Prefetcher0, for example, using one or more cxl.mem fields such as the tag field. At operation 1118, Prefetcher0 may send the first data from the Storage Device to GPU1. At operation 1120, Prefetcher0 may detect a runtime access pattern between GPUO and GPU1 based on the write and read operations 1106 and 1114. In some embodiments, the Prefetcher may not detect this pattern, for example, if the CPU has sent one or more indications of a producer-consumer relationship between GPUO and GPU1.

At operation 1122, Prefetcher0 may initiate a memory allocation for target memory at DRAM1 with the VMM. If the Prefetcher initiates a memory allocation by requesting a memory allocation from the host CPU, the VMM located at the host device may perform the allocation. If, however, Prefetcher0 performs the memory allocation itself, it may use the VMM located at the Storage Device. At operation 1124, the VMM (whether at the host CPU or Storage Device) may allocate target space in DRAM1. At operation 1126, Prefetcher0 may prefetch the data from the stream in which it was stored. At operation 1128, Prefetcher0 may push the prefetched data to DRAM1. At operation 1130, Prefetcher0 may request the host CPU to update a page table for the data pushed to DRAM1.

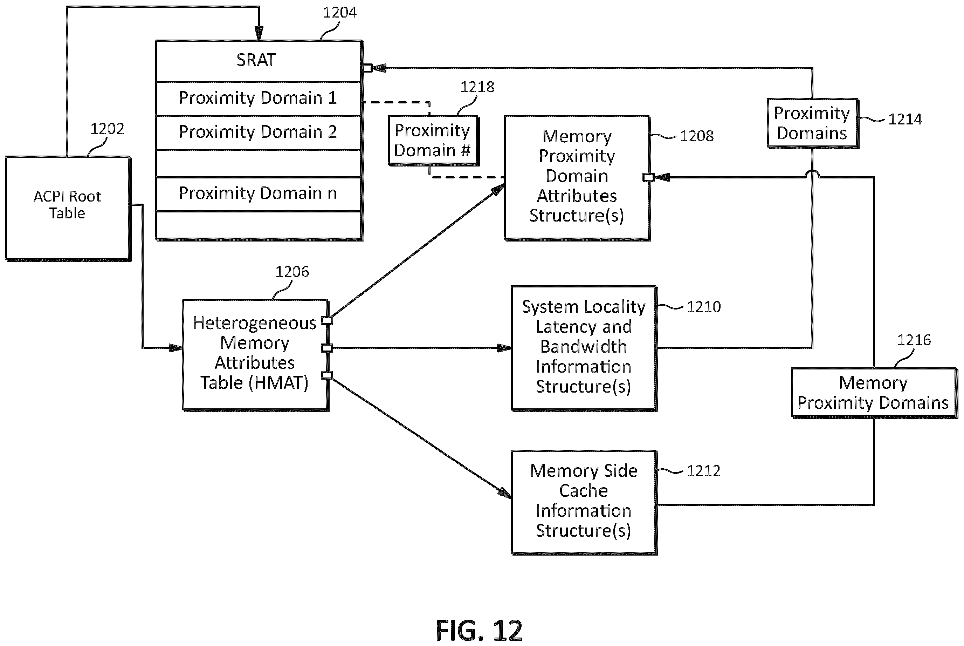

Fig. 12 illustrates an example embodiment of a heterogeneous memory control system in accordance with example embodiments of the invention.

The embodiment illustrated in Fig. 12 may include an Advanced Configuration and Power Interface (ACPI) Root Table 1202, a system resource affinity table (SRAT) 1204, and a heterogeneous memory attributes table (HMAT) 1206, which may be used to implement Memory Proximity Domain Attributes Structure(s) 1208, System Locality Latency and Bandwidth Information Structure(s) 1210, and Memory Side Cache Information Structure(s) 1212, which in turn may implement one or more Memory Proximity Domains 1216, one or more Proximity Domains 1214, and/or one or more Proximity Domain Numbers (1218).

The embodiment illustrated in Fig. 12 may be used, for example, to use one or more CXL features to obtain GI IDs for one or more GPUs at compute devices, prefetchers at storage devices, I/O devices, and/or the like. Additionally, the ACPI Root Table 1202, SRAT 1204, and or HMAT 1206 may provide information about processors, memory ranges, GIs, (e.g., heterogeneous processors, accelerators, GPUs, and/or I/O devices with integrated compute or DMA engines). In some implementations, some or all requests from a first CXL device to a second CXL device may be routed through the host. However, in some systems in accordance with example embodiments of the invention, a host CPU may pass producer and/or consumer GI ID information to a prefetcher (e.g., at a storage controller), for example, a cxl.mem tag and/or metavalue + metafield fields.

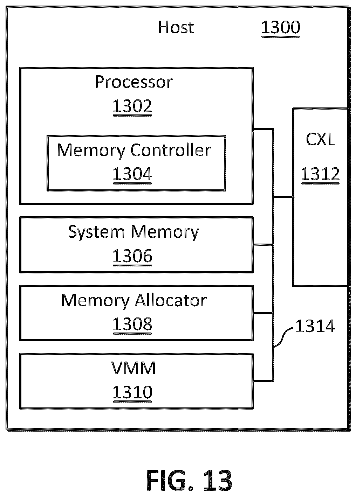

Fig. 13 illustrates an example embodiment of a host apparatus that may be used to implement data prefetching and transfer in accordance with example embodiments of the invention. The host apparatus 1300 illustrated in Fig. 13 may include a processor 1302, which may include a memory controller 1304, a system memory 1306, a memory allocator 1308, a VMM 1310 and/or a interconnect interface 1312, which may be implemented, for example using CXL. Any or all of the components illustrated in Fig. 13 may communicate through one or more system buses 1314. In some embodiments, the host apparatus 1300 illustrated in Fig. 13 may be used to implement any of the host functionality disclosed herein including any of the functionality relating to providing one or more indications of producer-consumer relationships to a prefetcher, and/or allocating memory in a compute device for pushed data. In some embodiments, one or more of the components illustrated in Fig. 13 may be implemented using other components. For example, in some embodiments, one or more of the memory allocator 1308 and/or VMM 1310 may be implemented, for example, by the processor 1302 executing instructions stored in the system memory 1306 or other memory.

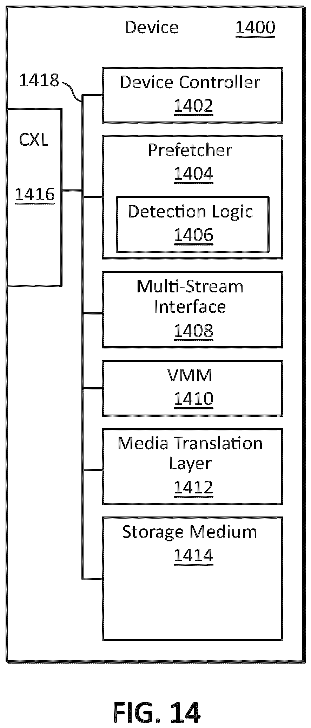

Fig. 14 illustrates an example embodiment of a device that may be used to implement data prefetching and transfer in accordance with example embodiments of the invention. The device 1400 includes a prefetcher 1404 which may include detection logic 1406, a storage medium 1414, and an interconnect interface 1416, and may include a device controller 1402, a multi-stream interface 1408, a VMM 1410, and a media translation layer 1412. The components illustrated in Fig. 14 may communicate through one or more device buses 1418. In some embodiments, the device 1400 illustrated in Fig. 14 may be used to implement any of the prefetching and/or data pushing functionality disclosed herein.

Any of the functionality described herein, including any of the host functionality, device functionally, and/or the like described with respect to Figs. 1-14, for example, a prefetcher, detection logic, and/or the like, may be implemented with hardware, software, or any combination thereof including combinational logic, sequential logic, one or more timers, counters, registers, state machines, volatile memories such as DRAM and/or static random access memory (SRAM), nonvolatile memory and/or any combination thereof, complex programmable logic devices (CPLDs), field programmable gate arrays (FPGAs), application specific integrated circuits (ASICs), central processing units (CPUs) such as complex instruction set computer (CISC) processors such as x86 processors and/or reduced instruction set computer (RISC) processors such as ARM processors, graphics processing units (GPUs), neural processing units (NPUs), and/or the like, executing instructions stored in any type of memory. In some embodiments, one or more components may be implemented as a system-on-chip (SOC).

Any of the storage devices disclosed herein may be implemented in any form factor such as 3.5 inch, 2.5 inch, 1.8 inch, M.2, Enterprise and Data Center SSD Form Factor (EDSFF), NF1, and/or the like, using any connector configuration such as Serial ATA (SATA), Small Computer System Interface (SCSI), Serial Attached SCSI (SAS), U.2, and/or the like. Any of the storage devices disclosed herein may be implemented entirely or partially with, and/or used in connection with, a server chassis, server rack, dataroom, datacenter, edge datacenter, mobile edge datacenter, and/or any combinations thereof.

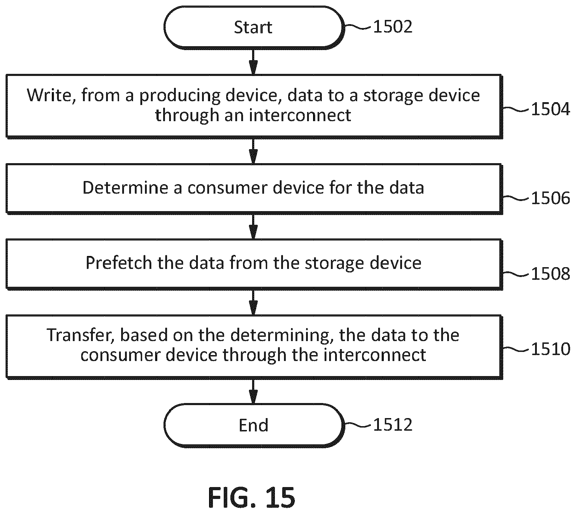

Fig. 15 illustrates aspects of an embodiment of a method for transferring data in accordance with example embodiments of the invention. The method may begin at operation 1502. At operation 1504, the method writes, by a producer device, data to a storage device through an interconnect. For example, a GPU may write the results of a first computation as first data to the storage device. At operation 1506, the method determines a consumer device for the data. For example, a consumer device for the data may form the next stage of a pipeline that may use the first data as an input for a computation at the next stage. At operation 1508, the method prefetches the data from the storage device. At operation 1510, the method transfers, based on the determining, the data to the consumer device through the interconnect. For example, the prefetcher may push the prefetched data to memory at the consumer device.

The embodiment illustrated in Fig. 15, as well as all of the other embodiments described herein, are example operations and/or components. In some embodiments, some components may be omitted and/or other operations and/or components may be included. Although some components and/or operations may be illustrated as individual components, in some embodiments, some components and/or operations shown separately may be integrated into single components and/or operations, and/or some components and/or operations shown as single components and/or operations may be implemented with multiple components and/or operations.

## Claims

1. A method for transferring data (638, 640), the method comprising:
receiving, at a prefetcher (224, 324, 424) for the storage device (106, 206, 306, 406), an indication of a relationship between a producer device and a consumer device;
writing (1504), from the producer device, first data (638) to a storage device (106, 206, 306, 406) through an interconnect (108, 208, 308), the first data (638) including second data (640); determining (1506) the consumer device for the second data (640) based on the indication;
prefetching (1508) the second data (640) from the storage device (106, 206, 306, 406); and
transferring (1510), based on the determining, the second data (640) to the consumer device through the interconnect (108, 208, 308), and
**characterized in that**
the indication is provided, through the interconnect (108, 208, 308) to the prefetcher (224, 324, 424), by an application (403, 803) associated with the consumer device; and
the second data (640) is prefetched while the first data (638) is written.

2. The method of claim 1, further comprising placing the first data (638) in a stream at the storage device (106, 206, 306, 406) based on the relationship between the producer device and the consumer device.

3. The method of claim 1 or 2, wherein receiving the indication comprises receiving the indication through a coherent memory protocol for the interconnect (108, 208, 308).

4. The method of claim 3, wherein receiving the indication through the coherent memory protocol comprises:
receiving a producer identifier, ID, and a consumer ID through one or more fields of the coherent memory protocol.

5. The method of any one of the previous claims, further comprising:
detecting, at the prefetcher (224, 324, 424) for the storage device (106, 206, 306, 406), an access pattern of the producer device and the consumer device; and
determining the consumer device based on the access pattern.

6. The method of any one of the previous claims, further comprising allocating, by a host, memory (118, 218, 318) at the consumer device for the data (638, 640).

7. The method of any one of the previous claims, further comprising allocating, by the storage device (106, 206, 306, 406), memory (118, 218, 318) at the consumer device for the second data (640).

8. The method of claim 7, wherein the memory (118, 218, 318) at the consumer device comprises reserved memory (118, 218, 318).

9. The method of claim 7 or 8, further comprising updating, by the host, a mapping for the memory (118, 218, 318) at the consumer device.

10. The method of any one of the previous claims, wherein the transferring (1510) overlaps a compute operation at the consumer device.

11. The method of any one of the previous claims, further comprising notifying the prefetcher (224, 324,424) for the storage device (106, 206, 306, 406) of a status of the writing.

12. A system comprising:
an interconnect (108, 208, 308);
a producer device coupled to the interconnect (108, 208, 308);
a consumer device coupled to the interconnect (108, 208, 308);
a storage device (106, 206, 306, 406) coupled to the interconnect (108, 208, 308) and configured to store first data (638) received from the producer device through the interconnect (108, 208, 308), the first data (638) including second data (640);
a prefetcher (224, 324, 424) coupled to the interconnect (108, 208, 308), and
wherein the prefetcher (224, 324, 424) is configured to:
receive an indication of a relationship between the producer device and the consumer device,
perform a determination of the consumer device based on the indication;
prefetch the second data (640) from the storage device (106, 206, 306, 406); and
transfer, based on the determination, the second data (640) to the consumer device through the interconnect (108, 208, 308), and
**characterized in that**
the system further comprises an application (403, 803) associated with the consumer device and configured to provide the indication through the interconnect (108, 208, 308) to the prefetcher (224, 324, 424), and
wherein the prefetcher (224, 324, 424) is configured to prefetch the second data (640) while the first data (638) is written.

13. The system of claim 12, further comprising a data structure configured to store information on a relationship between a producer device of the first data (638) and the consumer device.

14. The system of claim 13, further comprising a multi-stream interface (430, 1408) configured to store the first data (638) received through the interconnect interface (1416) in a stream of the storage medium (120, 220, 320, 420) based on the relationship.

15. The system of any one of the claims 12 to 14, wherein the prefetcher (224, 324, 424) comprises detection logic configured to determine an access pattern for the consumer device and a producer device of the first data (638).

16. The system of claim any one of claims 12 to 15, further comprising a host device (102, 302, 402) coupled to the interconnect (108, 208, 308) and configured to send, through the interconnect (108, 208, 308), information to the prefetcher (224, 324, 424) about a relationship between the producer device and the consumer device.

## Patentansprüche

1. Verfahren zum Übertragen von Daten (638, 640), wobei das Verfahren umfasst:
Empfangen einer Anzeige einer Beziehung zwischen einer Erzeugervorrichtung und einer Verbrauchervorrichtung an einem Prefetcher (224, 324, 424) für die Speichervorrichtung (106, 206, 306, 406);
Schreiben (1504) erster Daten (638) von der Erzeugervorrichtung zu einer Speichervorrichtung (106, 206, 306, 406) über eine Zwischenverbindung (108, 208, 308), wobei die ersten Daten (638) zweite Daten (640) enthalten;
Bestimmen (1506) der Verbrauchervorrichtung für die zweiten Daten (640) basierend auf der Anzeige;
Vorabrufen (1508) der zweiten Daten (640) von der Speichervorrichtung (106, 206, 306, 406); und
Übertragen (1510) der zweiten Daten (640) an die Verbrauchervorrichtung durch die Zwischenverbindung (108, 208, 308), basierend auf dem Bestimmen, und
**dadurch gekennzeichnet, dass**
die Anzeige durch die Zwischenverbindung (108, 208, 308) an den Prefetcher (224, 324, 424) durch eine Anwendung (403, 803) bereitgestellt wird, die mit der Verbrauchervorrichtung verbunden ist; und
die zweiten Daten (640) vorabgerufen werden, während die ersten Daten (638) geschrieben werden.

2. Verfahren nach Anspruch 1, ferner umfassend Platzieren der ersten Daten (638) in einem Strom an der Speichervorrichtung (106, 206, 306, 406) basierend auf der Beziehung zwischen der Erzeugervorrichtung und der Verbrauchervorrichtung.

3. Verfahren nach Anspruch 1 oder 2, wobei Empfangen der Anzeige Empfangen der Anzeige durch ein kohärentes Speicherprotokoll für die Zwischenverbindung (108, 208, 308) umfasst.

4. Verfahren nach Anspruch 3, wobei Empfangen der Anzeige durch das kohärente Speicherprotokoll umfasst:
Empfangen eines Erzeuger-Identifikators, ID, und einer Verbraucher-ID durch ein oder mehrere Felder des kohärenten Speicherprotokolls.

5. Verfahren nach einem der vorhergehenden Ansprüche, das ferner Folgendes umfasst:
Erfassen eines Zugriffsmusters der Erzeugervorrichtung und der Verbrauchervorrichtung an dem Prefetcher (224, 324, 424) für die Speichervorrichtung (106, 206, 306, 406); und
Bestimmen der Verbrauchervorrichtung basierend auf dem Zugriffsmuster.

6. Verfahren nach einem der vorhergehenden Ansprüche, das ferner Zuweisen von Speicher (118, 218, 318) an der Verbrauchervorrichtung für die Daten (638, 640) durch einen Host umfasst.

7. Verfahren nach einem der vorhergehenden Ansprüche, das ferner Zuweisen von Speicher (118, 218, 318) an der Verbrauchervorrichtung für die zweiten Daten (640) durch die Speichervorrichtung (106, 206, 306, 406) umfasst.

8. Verfahren nach Anspruch 7, wobei der Speicher (118, 218, 318) in der Verbrauchervorrichtung reservierten Speicher (118, 218, 318) umfasst.

9. Verfahren nach Anspruch 7 oder 8, ferner umfassend Aktualisieren einer Abbildung für den Speicher (118, 218, 318) in der Verbrauchervorrichtung durch den Host.

10. Verfahren nach einem der vorhergehenden Ansprüche, wobei das Übertragen (1510) eine Rechenoperation in der Verbrauchervorrichtung überlappt.

11. Verfahren nach einem der vorhergehenden Ansprüche, das ferner Benachrichtigen des Prefetchers (224, 324, 424) für die Speichervorrichtung (106, 206, 306, 406) über einen Status des Schreibens umfasst.

12. System, das Folgendes umfasst:
eine Zwischenverbindung (108, 208, 308);
eine Erzeugervorrichtung, die mit der Zwischenverbindung (108, 208, 308) verbunden ist;
eine Verbrauchervorrichtung, die mit der Zwischenverbindung (108, 208, 308) verbunden ist;
eine Speichervorrichtung (106, 206, 306, 406), die mit der Zwischenverbindung (108, 208, 308) verbunden und so konfiguriert ist, dass sie erste Daten (638) speichert, die von der Erzeugervorrichtung über die Zwischenverbindung (108, 208, 308) empfangen werden, wobei die ersten Daten (638) zweite Daten (640) enthalten;
einen Prefetcher (224, 324, 424), der mit der Zwischenverbindung (108, 208, 308) verbunden ist, und
wobei der Prefetcher (224, 324, 424) konfiguriert ist zum:
Empfangen einer Anzeige einer Beziehung zwischen dem Erzeugergerät und dem Verbrauchergerät,
Durchführen einer Bestimmung der Verbrauchervorrichtung basierend auf der Anzeige;
Vorabrufen der zweiten Daten (640) von der Speichervorrichtung (106, 206, 306, 406); und
Übertragen, basierend auf der Bestimmung, der zweiten Daten (640) zu der Verbrauchervorrichtung durch die Zwischenverbindung (108, 208, 308), und
**dadurch gekennzeichnet, dass**
das System ferner eine Anwendung (403, 803) umfasst, die mit der Verbrauchervorrichtung verbunden ist und so konfiguriert ist, dass sie die Anzeige über die Zwischenverbindung (108, 208, 308) an den Prefetcher (224, 324, 424) bereitstellt, und
wobei der Prefetcher (224, 324, 424) so konfiguriert ist, dass er die zweiten Daten (640) vorabruft, während die ersten Daten (638) geschrieben werden.

13. System nach Anspruch 12, das ferner eine Datenstruktur umfasst, die so konfiguriert ist, dass sie Informationen über eine Beziehung zwischen einer Erzeugervorrichtung der ersten Daten (638) und der Verbrauchervorrichtung speichert.

14. System nach Anspruch 13, das ferner eine Multi-Stream-Schnittstelle (430, 1408) umfasst, die so konfiguriert ist, dass sie die über die Verbindungsschnittstelle (1416) empfangenen ersten Daten (638) basierend auf der Beziehung in einem Strom des Speichermediums (120, 220, 320, 420) speichert.

15. System nach einem der Ansprüche 12 bis 14, wobei der Prefetcher (224, 324, 424) eine Erkennungslogik umfasst, die so konfiguriert ist, dass sie ein Zugriffsmuster für die Verbrauchervorrichtung und die Erzeugervorrichtung der ersten Daten (638) bestimmt.

16. System nach einem der Ansprüche 12 bis 15, das ferner eine Host-Vorrichtung (102, 302, 402) umfasst, die mit der Zwischenverbindung (108, 208, 308) verbunden und so konfiguriert ist, dass sie über die Zwischenverbindung (108, 208, 308) Informationen über eine Beziehung zwischen der Erzeugervorrichtung und der Verbrauchervorrichtung an den Prefetcher (224, 324, 424) sendet.

## Revendications

1. Procédé pour transférer des données (638, 640), le procédé comprenant les étapes suivantes consistant à:
recevoir, au niveau d'un prélecteur (224, 324, 424) pour le dispositif de stockage (106, 206, 306, 406), une indication d'une relation entre un dispositif producteur et un dispositif consommateur;
écrire (1504), du dispositif producteur, des premières données (638) à un dispositif de stockage (106, 206, 306, 406) par une interconnexion (108, 208, 308), les premières données (638) comprenant des deuxièmes données (640);
déterminer (1506) le dispositif consommateur pour les deuxième données (640) sur la base de l'indication;
prélire (1508) les deuxièmes données (640) du dispositif de stockage (106, 206, 306, 406); et
transférer (1510), sur la base de la détermination, les deuxièmes données (640) au dispositif consommateur par l'interconnexion (108, 208, 308), et
**caractérisé en ce que**
l'indication est fournie, par l'interconnexion (108, 208, 308), au prélecteur (224, 324, 424), par une application (403, 803) associée au dispositif consommateur; et
les deuxièmes données (640) sont prélues pendant que les premières données (638) sont écrites.

2. Procédé de la revendication 1, comprenant en outre l'étape suivante consistant à placer les premières données (638) dans un flux au niveau du dispositif de stockage (106, 206, 306, 406) sur la base de la relation entre le dispositif producteur et le dispositif consommateur.

3. Procédé de la revendication 1 ou 2, dans lequel la réception de l'indication comprend la réception de l'indication par l'intermédiaire d'un protocole de mémoire cohérente pour l'interconnexion (108, 208, 308).

4. Procédé de la revendication 3, dans lequel la réception de l'indication par l'intermédiaire du protocole de mémoire cohérente comprend:
la réception d'un identifiant, ID, de producteur et d'un ID de consommateur par l'intermédiaire d'un ou plusieurs champs du protocole de mémoire cohérente.

5. Procédé de l'une quelconque des revendications précédentes, comprenant en outre l'étape suivante consistant à:
détecter, au niveau du prélecteur (224, 324, 424) du dispositif de stockage (106, 206, 306, 406), un modèle d'accès du dispositif producteur et du dispositif consommateur; et
déterminer le dispositif consommateur sur la base du modèle d'accès.

6. Procédé de l'une quelconque des revendications précédentes, comprenant en outre l'étape suivant consistant à allouer, par un hôte, de la mémoire (118, 218, 318) au dispositif consommateur pour les données (638, 640).

7. Procédé de l'une quelconque des revendications précédentes, comprenant en outre l'étape suivant consistant à allouer, par le dispositif de stockage (106, 206, 306, 406), de la mémoire (118, 218, 318) au dispositif consommateur pour les deuxièmes données (640).

8. Procédé de la revendication 7, dans lequel la mémoire (118, 218, 318) au niveau du dispositif consommateur comprend une mémoire réservée (118, 218, 318).

9. Procédé de la revendication 7 ou 8, comprenant en outre l'étape suivante consistant à actualiser, par l'hôte, un mappage pour la mémoire (118, 218, 318) au niveau du dispositif consommateur.

10. Procédé de l'une quelconque des revendications précédentes, dans lequel le transfert (1510) coïncide avec une opération de calcul au niveau du dispositif consommateur.

11. Procédé de l'une quelconque des revendications précédentes, comprenant en outre l'étape suivante consistant à notifier au prélecteur (224, 324, 424) du dispositif de stockage (106, 206, 306, 406) un statut de l'écriture.

12. Système comprenant:
une interconnexion (108, 208, 308);
un dispositif producteur couplé à l'interconnexion (108, 208, 308);
un dispositif consommateur couplé à l'interconnexion (108, 208, 308);
un dispositif de stockage (106, 206, 306, 406) couplé à l'interconnexion (108, 208, 308) et configuré pour stocker les premières données (638) reçues du dispositif producteur par l'interconnexion (108, 208, 308), les premières données (638) comprenant les deuxièmes données (640);
un prélecteur (224, 324, 424) couplé à l'interconnexion (108, 208, 308), et
dans lequel le prélecteur (224, 324, 424) est configuré pour:
recevoir une indication d'une relation entre le dispositif producteur et le dispositif consommateur,
effectuer une détermination du dispositif consommateur sur la base de l'indication;
prélire les deuxièmes données (640) du dispositif de stockage (106, 206, 306, 406); et
transférer, sur la base de la détermination, les deuxièmes données (640) au dispositif consommateur par l'interconnexion (108, 208, 308), et
**caractérisé en ce que**
le système comprend en outre une application (403, 803) associée au dispositif consommateur et configurée pour fournir l'indication par l'interconnexion (108, 208, 308) au prélecteur (224, 324, 424), et
dans lequel le prélecteur (224, 324, 424) est configuré pour prélire les deuxièmes données (640) pendant que les premières données (638) sont écrites.

13. Système de la revendication 12, comprenant en outre une structure de données configurée pour stocker des informations sur une relation entre un dispositif producteur des premières données (638) et le dispositif consommateur.

14. Système de la revendication 13, comprenant en outre une interface multi-flux (430, 1408) configurée pour stocker les premières données (638) reçues par l'interface d'interconnexion (1416) dans un flux du support de stockage (120, 220, 320, 420) sur la base de la relation.

15. Système d'une quelconque des revendications 12 à 14, dans lequel le prélecteur (224, 324, 424) comprend une logique de détection configurée pour déterminer un modèle d'accès pour le dispositif consommateur et un dispositif producteur des premières données (638).

16. Système de la revendication 12 à 15, comprenant en outre un dispositif hôte (102, 302, 402) couplé à l'interconnexion (108, 208, 308) et configuré pour envoyer, par l'interconnexion (108, 208, 308), au prélecteur (224, 324, 424) des informations sur une relation entre le dispositif producteur et le dispositif consommateur.
